(19) **Europäisches Patentamt / European Patent Office / Office européen des brevets**

(11) **EP 4 423 984 B1**

(12) **EUROPEAN PATENT SPECIFICATION**

(45) Date of publication and mention
of the grant of the patent:
**18.02.2026 Bulletin 2026/08**

(21) Application number: **22813037.3**

(22) Date of filing: **25.10.2022**

(51) International Patent Classification (IPC):
**H04L 12/46** *(2006.01)*

(52) Cooperative Patent Classification (CPC):
**H04L 12/4641**

(86) International application number:
**PCT/US2022/078636**

(87) International publication number:
**WO 2023/076884 (04.05.2023 Gazette 2023/18)**

(54) **FILTERING VLAN PACKETS HAVING MALFORMED TPIDS**

FILTERN VON VLAN-PAKETEN MIT MISSGEBILDETEN TPIDS

FILTRAGE DE PAQUETS VLAN COMPORTANT DES TPID MAL FORMÉS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.10.2021 IN 202141048769
29.12.2021 US 202117565236**

(43) Date of publication of application:
**04.09.2024 Bulletin 2024/36**

(73) Proprietor: **Arista Networks, Inc.
Santa Clara, CA 95054 (US)**

(72) Inventors:
• **IYER, Anirudh Ramesh
Santa Clara, California 95054 (US)**
• **SELVARAJ, Satish Kumar
Santa Clara, California 95054 (US)**

• **OJHA, Akhil
Santa Clara, California 95054 (US)**
• **NANDAKUMARAN, Purushothaman
Santa Clara, California 95054 (US)**
• **AMAN-UL-HAQ, Aman
Santa Clara, California 95054 (US)**
• **KUNKUMATH, Jyothish
Santa Clara, California 95054 (US)**

(74) Representative: **Hoffmann Eitle
Patent- und Rechtsanwälte PartmbB
Arabellastraße 30
81925 München (DE)**

(56) References cited:
**WO-A1-2018/055654     US-A1- 2014 351 878
US-B2- 10 148 459**

**Description**

CROSS REFERENCE TO RELATED APPLICATIONS

BACKGROUND

The packet processing pipeline in a network device (e.g., switch, router, etc.) includes a parsing stage (parser) to parse an ingress packet and extract information (packet data and metadata) from the various fields of the packet. The metadata can be used in the downstream stages of the pipeline to further process the packet. When the parser is presented with a malformed packet, the malformed packet may be parsed incorrectly. The resulting metadata that is parsed from the malformed packet is likely to be garbled and otherwise meaningless. In some cases, the downstream stages of the pipeline can detect the garbled metadata and reject the malformed packet. In other cases, the downstream stages may not detect that the metadata is incorrect and hence may continue processing the packet not knowing the packet is malformed. This represents a potential exploit, where packets can be intentionally malformed in an attempt to bypass security features provided in the network device.

Packets on a virtual local area network (VLAN), for example, can be malformed in various ways. For instance, VLAN packets that contain more than two VLAN tags can be considered malformed. VLAN packets having unexpected tag protocol identifiers (TPIDs) can be deemed to be malformed. As noted above, a malformed packet can cause the parser to misclassify the packet, resulting in garbled metadata. In some cases, the metadata generated by parsing a malformed VLAN packet may not trigger or alert the downstream pipeline stages of the presence of the malformed packet. Continued processing of the malformed VLAN packet can have catastrophic results in a customer's networks. For example, the misclassified packet may be labeled as a Layer 2 (L2) packet, which could cause the network device to simply switch the packet. In such a case, if the network device does not implement L2 access control lists (ACLs, e.g., port ACLs, MAC ACLs, etc.) or other suitable L2 security features to filter the malformed packet, the packet will be forwarded which can lead to breaches in security and other security related issues in the customer's deployment.

US 2014/0351878 A1 discloses a network component has a set of one or more rules, each of which has a match component and an action component. If an incoming packet maps to the match component of a rule, then the packet is handled according to the rule's action component. If the rule also includes a limit component, then if the packet maps to the rule's match component, a family history of the rule is updated, and the packet is handled according to the rule's action component only if the rule's family history satisfies the rule's limit component.

SUMMARY

There is provided a method according to Claim 1 and a network device according to Claim 8.

BRIEF DESCRIPTION OF THE DRAWINGS

With respect to the discussion to follow and in particular to the drawings, it is stressed that the particulars shown represent examples for purposes of illustrative discussion, and are presented in the cause of providing a description of principles and conceptual aspects of the present disclosure. In this regard, no attempt is made to show implementation details beyond what is needed for a fundamental understanding of the present disclosure. The discussion to follow, in conjunction with the drawings, makes apparent to those of skill in the art how embodiments in accordance with the present disclosure may be practiced. Similar or same reference numbers may be used to identify or otherwise refer to similar or same elements in the various drawings and supporting descriptions. In the accompanying drawings:

FIG. 1 shows the format for an untagged VLAN packet.

FIG. 2 shows the format for a single-tagged VLAN packet.

FIG. 3 shows the format for a double-tagged VLAN packet.

[FIG. 4 shows the format for a triple-tagged VLAN packet.

FIG. 5 shows an illustrative network device.

FIG. 6 shows an example of a flow for processing an ingress packet.

FIG. 7 is a block diagram of an example of a packet processing pipeline.

FIG. 8 shows operations for parsing the EtherType from an ingress packet in accordance with some embodiments.

FIGs. 9 - 12 illustrate examples of malformed VLAN packets.

FIG. 13 shows an example of a TCAM in accordance with some embodiments.

FIG. 14 is an example of a block diagram of a packet processing pipeline that includes a parser for UDFs.

FIGs. 15 and 16 show TCAM examples that incorporate rules using UDFs.

## DETAILED DESCRIPTION

In the following description, for purposes of explanation, numerous examples and specific details are set forth in order to provide a thorough understanding of embodiments of the present disclosure.

For discussion purposes to illustrate aspects of the present disclosure, examples of packets will use the Ethernet II framing format. Ethernet II frames are known and well understood, and defined in accordance with various Institute of Electronics and Electrical Engineers (IEEE) networking standards. Packets can be untagged, single-tagged, and multi-tagged (e.g., double, triple, etc.).

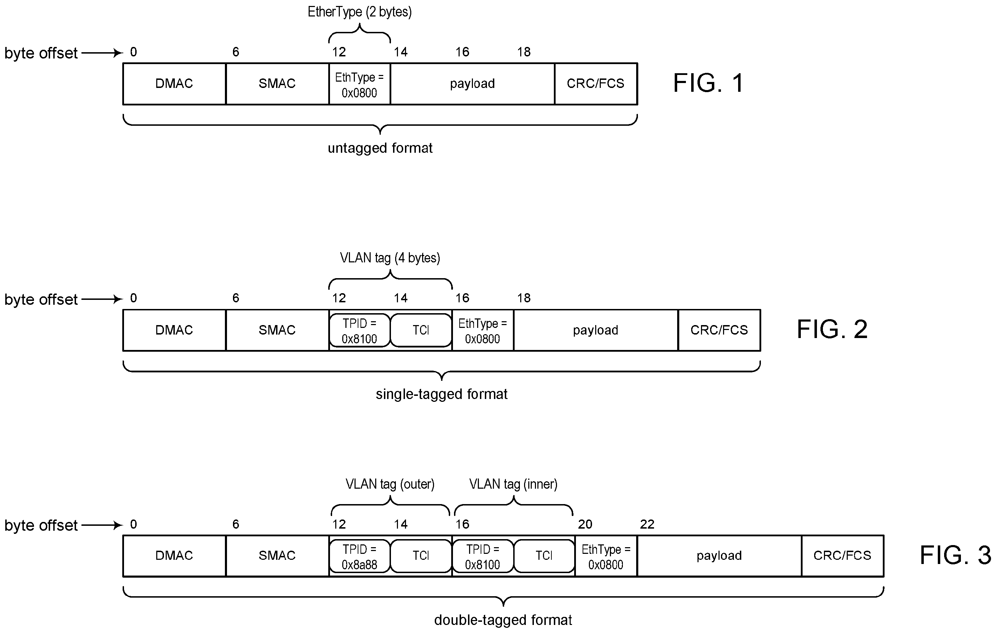

FIG. 1 shows the format for an untagged packet (Ethernet II frame). An untagged packet includes a destination media access control (DMAC) address that begins at byte offset 0 (byte 0), a source MAC (SMAC) address that begins at byte 6, an EtherType field at byte 12, and a payload that begins at byte 14. In a properly formed Ethernet II frame, the 2-byte EtherType field is expected to begin at offset 12 indicates the type of protocol that is encapsulated in the payload of the frame. A value of 0x800 in the EtherType field indicates that the payload contains an Internet Protocol v4 (IPv4) datagram. A value of 0x86dd indicates the payload contains an IPv6 datagram. Other EtherTypes are defined per various IEEE networking standards. For discussion purposes, the examples will use the EtherType for IPv4 datagrams, namely EtherType equals 0x0800.

FIG. 2 shows the format for a single-tagged VLAN packet. VLAN and VLAN packet formats are known and well understood, and defined in accordance with various IEEE networking standards. In the case of a single-tagged VLAN packet, a 4-byte VLAN tag is located between the SMAC address and the Ethertype field. Accordingly in a properly formed Ethernet II frame, the VLAN tag should begin at byte 12 and span four bytes. The EtherType field follows the VLAN tag and is pushed further down in the packet, occupying bytes 16 and 17 in the packet. The VLAN tag comprises two fields: a 2-byte TPID field and a 2-byte tag control information (TCI) field. The TCI field contains, among other information, the VLAN identifier.

The TPID serves to indicate that the frame is a VLAN packet. TPIDs are standardized according to various IEEE networking standards. For example, a TPID value of 0x8100 indicates the packet is a VLAN packet that is tagged in accordance with 802.1q (dot1q) which is an IEEE networking standard that defines VLAN tags.

Comparing FIG. 1 and FIG. 2, it can be seen that an untagged frame can be distinguished from a dot1q (single-tagged) frame by looking at the 16-bit word that begins at byte 12 in the frame. For example, if bytes 12:13 in the frame is 0x800, then the packet is deemed to be untagged; if bytes 12:13 == 0x8100, the packet is deemed to be a single-tagged VLAN packet.

FIG. 3 shows the format for a double-tagged VLAN packet. The outer VLAN tag begins at byte 12 and the inner VLAN tag begins at byte 16. In a properly formed Ethernet II frame, the EtherType field should occupy bytes 20:21. The TPID in the outer VLAN tag can be 0x8a88 to indicate the packet is tagged in accordance with 802.1ad (dot1ad), the IEEE networking standard for double-tagged VLAN packets (also referred to as QinQ and VLAN stacking). The TPID in the inner VLAN tag can be 0x8100 to indicate that the payload contains a single-tagged VLAN packet.

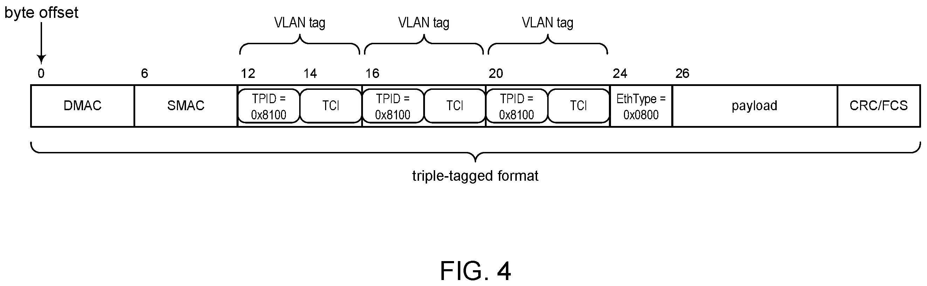

Referring to FIG. 4, the present disclosure is applicable to VLAN tagged packets having more than two stacked VLAN tags. For example, FIG. 4 shows a triple-tagged VLAN packet.

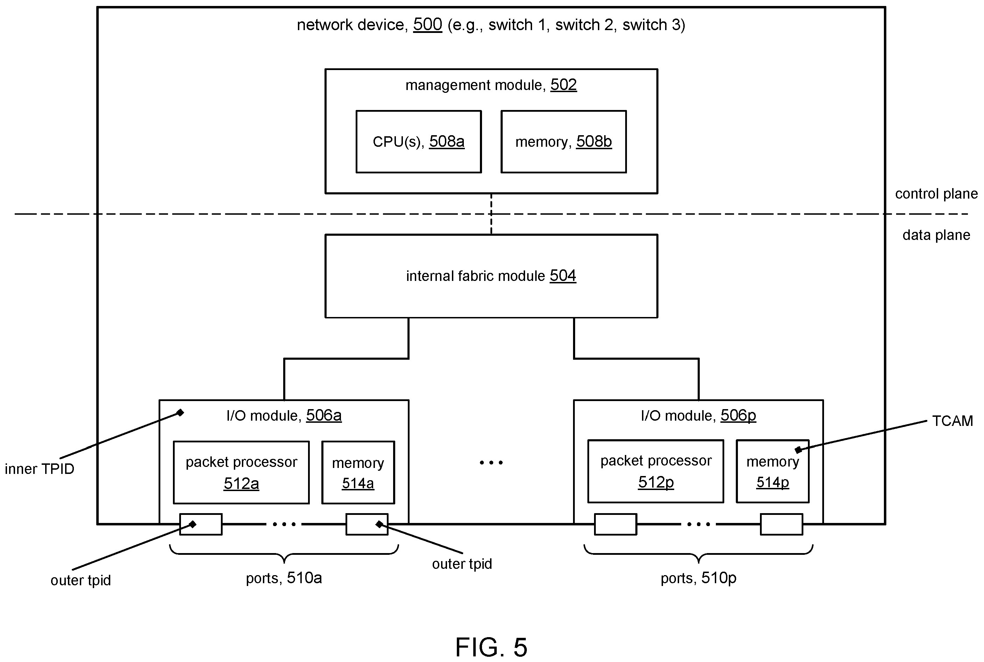

FIG. 5 depicts an example of a network device 500 in accordance with some embodiments of the present disclosure. As shown, network device 500 includes a management module 502, an internal fabric module 504, and a number of I/O modules 506a - 506p. Management module 502 includes the control plane (also referred to as control layer) of network device 500 and can include one or more management CPUs 508a for managing and controlling operation of network device 500 in accordance with the present disclosure. Each management CPU 508a can be a general purpose processor, such as but not limited to an Intel®/AMD® x86 or ARM® processor, that operates under the control of software stored in a memory 508b, such as dynamic random access memory (DRAM). Control plane refers to all the functions and processes that determine which path to use, such as routing protocols, spanning tree, and the like.

Internal fabric module 504 and I/O modules (chips) 506a - 506p collectively represent the data plane of network device 500 (also referred to as data layer, forwarding plane, etc.). Internal fabric module 504 is configured to interconnect the various other modules of network device 500. Each I/O module 506a - 506p includes a respective set of input/output (I/O) ports 510a - 510p which collectively constitute the ports of the network device for sending and receiving network packets. Each I/O module (chip) can be associated with an inner TPID where the inner TPID applies to all ports on the I/O module. Each port in an I/O module can be assigned or otherwise associated with a user-configurable (e.g., software programmable) outer TPID. The inner and outer TPIDs are discussed further below.

Each I/O module 506a - 506p can include a packet processor 512a - 512p and a respective memory component 514a - 514p. Each packet processor 512a - 512p can comprise a forwarding pipeline (e.g., application specific integrated circuit (ASIC), field programmable array (FPGA), digital processing unit, graphics coprocessors, content-addressable memory, and the like) configured to make decisions on how to process incoming (ingress) and outgoing (egress) network packets. Each memory component 514a - 514p can include a ternary content-addressable memory (TCAM) to store rules, specified in accordance with the present disclosure, for processing or filtering packets.

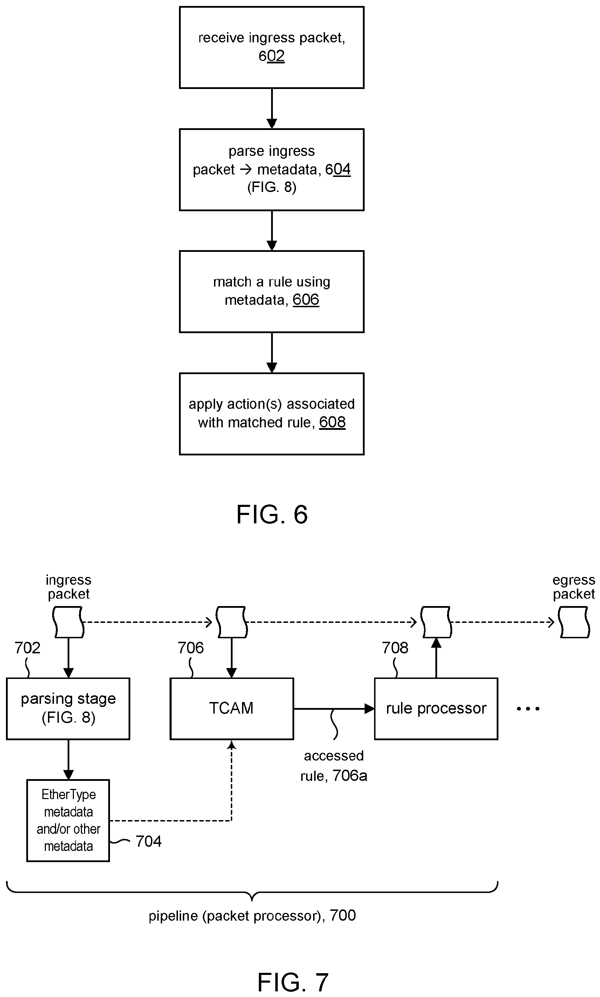

Referring to FIG. 6, the discussion will now turn to a high-level description of processing in a network device (e.g., 500, FIG. 5), and in particular a packet processor (e.g., 512a) in the network device, for receiving and processing a packet in accordance with the present disclosure.

At operation 602, the packet processor can receive an ingress packet on one of its ports (e.g., 510a). The packet processor can provide the ingress packet to a parsing stage in the processing pipeline of the packet processor. FIG. 7, for example, shows a processing pipeline 700 in the packet processor comprising parsing stage 702 for parsing an ingress packet.

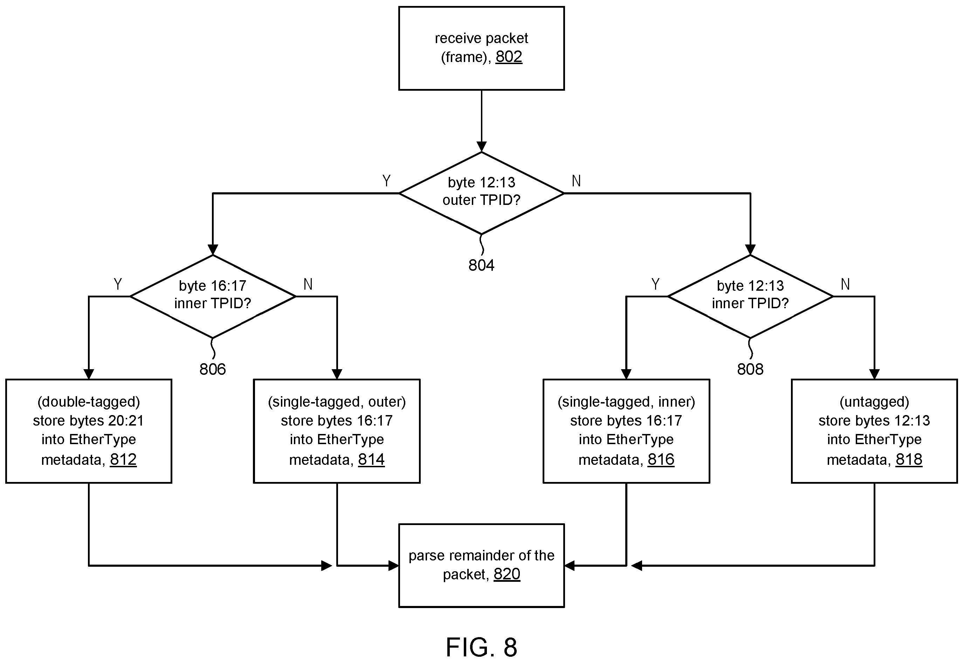

At operation 604, the packet processor can parse the ingress packet in the parsing stage of the processing pipeline. In accordance with some embodiments, the parsing stage can parse (FIG. 8) the EtherType field in the packet and store the parsed EtherType into an EtherType metadata, along with other metadata 704 (FIG. 7) that can be parsed from the ingress packet.

At operation 606, a lookup in TCAM 706 (FIG. 7) can be performed using the EtherType metadata and portions of the ingress packet to identify a rule stored in the TCAM.

At operation 608, an accessed rule 706a (FIG. 7) can be processed by rule processing logic 708 to produce an egress packet. The accessed rule can include actions to direct the rule processing logic to rewrite the ingress packet (e.g., change destination IP), to log information, or to drop the packet, and so on. Rules in accordance with the present disclosure are discussed below.

FIG. 8 shows a flow for processing in pipeline 700 (FIG. 7), and in particular parsing stage 702 of the pipeline, to parse an ingress packet and categorize the packet as being untagged (FIG. 1), single-tagged (FIG. 2), or double-tagged (FIG. 3). Pipeline architectures are known; for example, pipeline 700 can comprise a combination of programmed logic (e.g., field programmable gate array, FGPA, logic), microcode, and the like. The operations illustrate how the EtherType field can be parsed for tagged and untagged packets and stored into an EtherType metadata (e.g., in memory 514a in the network device) for further processing downstream in the pipeline.

The tagging category can be based on the TPID(s) contained in the ingress packet. In some embodiments, a TPID can be categorized as being an "outer" TPID or an "inner" TPID. An outer TPID is a TPID that is associated on a port by port basis. Each port on the network device can be configured (e.g., software programmable) by the user with a value for its outer TPID. In some embodiments, a port can be associated with more than one outer TPID. An inner TPID is a TPID that is associated with the chip (e.g., I/O module 506a) as a whole, which in turn associates each port on the chip with that inner TPID. In some embodiments, for example, the inner TPID can be hardwired into the chip; e.g. the inner TPID can be selected using jumpers on the circuit board. Accordingly, the inner TPID can be said to be fixed or otherwise is not configurable by software.

At 802, the processing pipeline can receive an ingress packet. Processing can begin by providing the packet to the parsing stage in the pipeline. The ingress packet can be parsed according to the following:

- Double-tagged - In some embodiments, a packet is considered double-tagged when:

  ○ bytes 12:13 match one of the outer TPIDs associated with the ingress port (Y branch at decision point 804)
  ○ bytes 16:17 match the inner TPID associated with the I/O module that supports the ingress port (Y branch at decision point 806)
  ○ Because the two bytes starting at byte 20 are interpreted as containing the Ethertype, byte 20 is the presumed (expected) starting location of the EtherType. Accordingly, the parsing stage will store the two bytes starting at byte 20 into the EtherType metadata (operation 812).

- Single-outer-tagged - In some embodiments, a packet is considered single-outer-tagged when:

  ○ bytes 12:13 match one of the outer TPIDs associated with the ingress port (Y branch at decision point 804)
  ○ bytes 16:17 do NOT match the inner TPID associated with the ingress port's I/O module (N branch at decision point 806)
  ○ Because the two bytes starting at byte 16 are interpreted as containing the Ethertype, byte 16 is the presumed (expected) starting location of the EtherType. Accordingly, the parsing stage will store the two bytes starting at byte 16 into the EtherType metadata (operation 814).

- Single-inner-tagged - In some embodiments, a packet is considered single-inner-tagged when:

  ○ bytes 12:13 do NOT match any of the outer TPIDs associated with the ingress port (N branch at decision point 804)
  ○ bytes 16:17 match the inner TPID associated with the ingress port's I/O module (Y branch at decision point 808)
  ○ Because the two bytes starting at byte 16 are interpreted as containing the Ethertype, byte 16 is the presumed (expected) starting location of the EtherType. Accordingly, the parsing stage will store the two bytes starting at byte 16 into the EtherType metadata (operation 816).

- Untagged - In some embodiments, a packet is considered untagged when:

  ○ bytes 12:13 do NOT match any of the outer TPIDs associated with the ingress port (N branch at decision point 804)
  ○ bytes 16:17 do NOT match the inner TPID associated with the ingress port's I/O module (N branch at decision point 808)
  ○ Because the two bytes starting at byte 12 are interpreted as containing the Ethertype, byte 12 is the presumed (expected) starting location of the EtherType. Accordingly, the parsing stage will store the two bytes starting at byte 12 into the EtherType metadata (operation 818).

At operation 820, the processing pipeline can process the remainder of the packet to parse other metadata, and so on. In some embodiments, for example, when the packet is considered to be double-tagged, operation 820 can include additional processing to detect a triple-tagged packet (e.g., FIG. 4). For example, when a packet is deemed to be double-tagged the processing pipeline can parse for another TPID. If the processing pipeline parses a TPID == 0x88a8 or 0x8100 or 0x9100, the packet can be deemed to be triple-tagged and the processing pipeline can indicate the occurrence of such a packet, for example, by via appropriate pipeline metadata. Basically, a triple-tagged packet = double-tagged packet + next TPID == 0x88a8 or 0x8100 or 0x910

The discussion will now turn to examples of properly formed and malformed (improperly formed) VLAN packets. Consider the packets shown in FIGs. 1, 2, and 3, which are deemed to be properly formed VLAN packets. Suppose they are received on a given port on the network device, and assume without loss of generality that the outer TPID for the given port is 0x8a88 and the I/O module (chip) to which the port is connected is programmed with an inner TPID of 0x8100. Applying the parsing sequence of FIG. 8 to the packets shown in FIGs. 1, 2, and 3, it can be seen that:

- The packet in FIG. 1 will be categorized as an untagged packet because bytes 12:13 are not equal to either the outer TPID (0x8a88) or the inner TPID (0x8100). The parser will parse the data at bytes 12:13 as the EtherType and set the EtherType metadata to the correct value of 0x800. In other words, bytes 12:13 are interpreted as containing the Ether-Type.

- The packet in FIG. 2 will be categorized as single-tagged packet, and in particular as a single-inner-tagged packet, because bytes 12:13 are not equal to the outer TPID (0x8a88) but is equal to the inner TPID (0x8100). The parser will parse the data at bytes 16:17as the EtherType and set the EtherType metadata to the correct value of 0x800. In other words, bytes 16:17 are interpreted as containing the EtherType.

- The packet in FIG. 3 will be categorized as a double-tagged packet because bytes 12:13 are equal to the outer TPID (0x8a88) and bytes 16:17 are equal to the inner TPID (0x8100). The parser will parse the data at bytes 20:21 as the EtherType and set the Ether-Type metadata to the correct value of 0x800. In other words, bytes 20:21 are interpreted as containing the EtherType.

We now consider examples of packets with malformed TPID configurations to illustrate how such packets can affect parsing of the EtherType metadata.

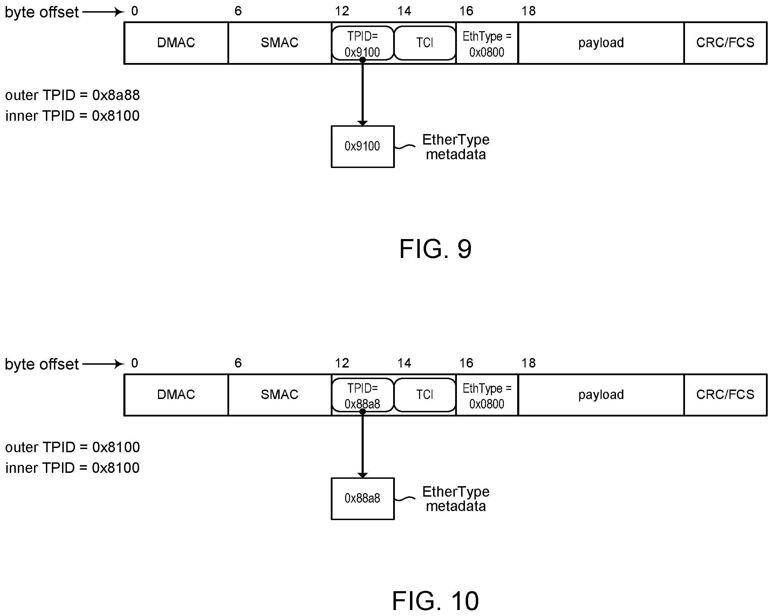

FIG. 9 shows an example of a malformed packet received on a port configured with outer TPID 0x8a88, on a chip programmed with inner TPID 0x8100. The packet has the format of a single-tagged VLAN packet, where the Ethertype is at bytes 16:17. However, per the flow in FIG. 8, the packet will be mis-categorized as an untagged packet. The packet does not appear to the parser as a VLAN packet because bytes 12:13 of the packet hold the value 0x9100 which does not match the outer TPID (0x8a88) or the inner TPID (0x8100). Accordingly, the packet appears to the parser as an untagged packet (see FIG. 1) and will set the EtherType metadata according to the content of bytes 12:13 (per operation 818) where the EtherType is located for untagged packets. However, bytes 12:13 in the packet in FIG. 9 contains 0x9100 and so the EtherType metadata will be set to 0x9100. Accordingly, any security ACLs or other security measures that target VLAN packets will be bypassed because the expected TPIDs were not detected. Absent suitable L2 security measures, the malformed packet (whether unintentional or intentional with malicious intent) may then be forwarded onto the next hop and into the network, thus putting the network at risk.
FIG. 10 shows another example of a malformed packet received on a port configured with outer TPID 0x8100, on a chip programmed with inner TPID 0x8100. Again, the packet has the format of a single-tagged VLAN packet. Again, per the flow in FIG. 8, the packet will be mis-categorized as an untagged packet because bytes 12:13 of the packet (0x88a8) do not match either the outer TPID (0x8100) or the inner TPID (0x8100), and so the parser will not recognize the packet as being a VLAN packet but rather as an untagged packet. The EtherType metadata will be incorrectly set to the data at bytes 12:13, namely 0x8a88, at operation 818.

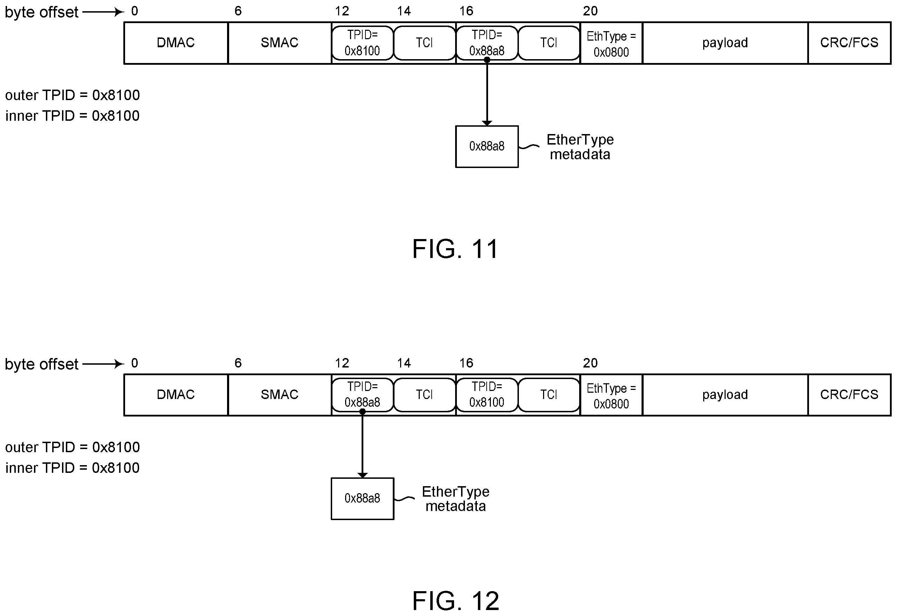

FIG. 11 shows a malformed packet received on a port configured with outer TPID 0x8100, on a chip programmed with inner TPID 0x8100. The packet has the format of a double-tagged VLAN packet. Per the flow in FIG. 8, however, the packet will be mis-categorized as a single-outer-tagged packet because bytes 12:13 of the packet (0x8100) match the outer TPID (0x8100) and bytes 16:17 of the packet (0x88a8) do not match the inner TPID (0x8100). The packet appears to the parser as a single-tagged VLAN packet (see FIG. 2, for example) and consequently expects the EtherType to be at bytes 16:17. Accordingly, the parser will set the EtherType metadata to the value at data at bytes 16:17, which in FIG. 11 is 0x8a88 (operation 814).

FIG. 12 shows a malformed packet received on a port configured with outer TPID 0x8100, on a chip programmed with inner TPID 0x8100. The packet appears to be a double-tagged VLAN packet. Per the flow in FIG. 8, however, the packet will be mis-categorized. Because bytes 12:13 of the packet (0x88a8) do not match the outer TPID (0x8100) nor the inner TPID (0x8100), the parser will miscategorize the packet as being an untagged packet. The parser will set the EtherType metadata to the data at bytes 12:13, where the EtherType is expected to be located for an untagged packet. However, bytes 12:13 in the example shown in FIG. 12 contain 0x8a88, instead of 0x0800 (the EtherType for IPv4).

In accordance with the present disclosure, malformed VLAN packets can be detected by programming suitable rules in the TCAM. In some embodiments, for example, the TCAM rule(s) can match on the parsed EtherType metadata. More specifically, in some embodiments, the match can be based on the EtherType metadata being set to a value equal to a VLAN TPID, such as 0x8100 (dot1q), 0x88a8 (dot1ad), rather than being set to a standard EtherType (e.g., 0x0800 for IPv4, 0x86dd for IPv6). In some embodiments, the match can be based on VLAN metadata parsed from the ingress packet, in addition to or instead of the parsed EtherType metadata. In some embodiments, for example, the match can be based on the VLAN ID contained in the ingress packet.

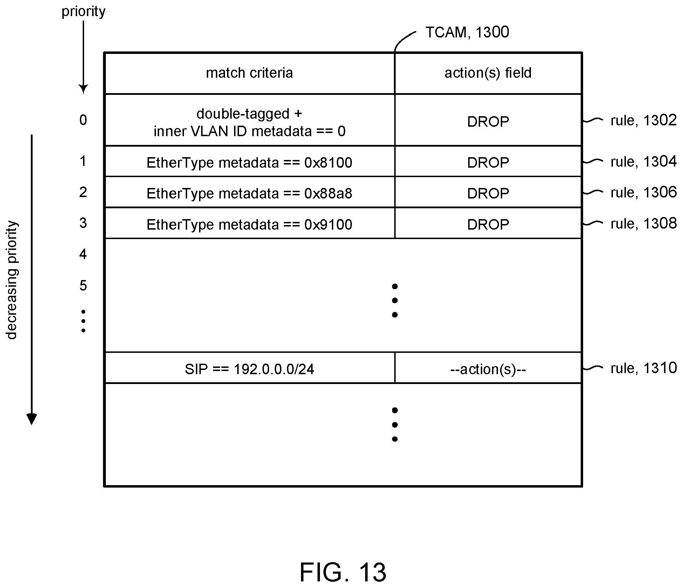

FIG. 13 shows a TCAM 1300 configured with rules defined in accordance with some embodiments. TCAMs and TCAM rules are known. Briefly, a TCAM rule comprises match criteria for matching packets and one or more actions that are invoked when the match criteria are met. The match criteria can match various data in a packet, including for example source and destination addresses, source and destination ports, protocol type, data in the payload, and so on. The match criteria can match metadata parsed from the packet; e.g., the EtherType metadata. Action(s) include dropping a packet, redirecting a packet, rewriting one or more fields in a packet, logging a message, and so on. For discussion purposes, a TCAM rule can be expressed or represented in the form of an IF - THEN statement:

IF <condition(s) are met>, THEN <perform action(s)>
where the conditions in the IF portion represent one or more match criteria and the THEN portion expresses the action(s) performed on a matched packet.

Rules (e.g., 1302, 1304) are ordered in TCAM 1300 from top to bottom in decreasing priority. Rule 1302 has higher priority than rule 1304, rule 1304 has priority than rule 1306, and so on. TCAMs and their operation are very well known and understood. Briefly, when a TCAM lookup is performed, the first rule (starting with the highest priority rule) that matches on the ingress packet contents and/or corresponding metadata will be invoked, and the corresponding action(s) performed. No further rules in the TCAM are matched; the packet continues to the next stage in the packet processing pipeline.

Depending on the rule, the rule can match on contents of the ingress packet as the match criteria (e.g., source and destination MAC address, etc.), the rule can match on metadata parsed in the parsing stage (e.g., EtherType metadata) as the match criteria, or the rule can match on a combination of packet contents and metadata. Each of rules 1302 - 1310, for example, matches on metadata, whereas rule 1310 matches on the packet content.

As shown by the foregoing examples, when a packet with malformed TPID(s) is parsed, the Ethertype metadata can be set to a TPID value (e.g., 0x8100, 0x88a8, etc.) rather than to a valid EtherType value (e.g.,, 0x0800, 0x86dd, etc.). TCAM rules can be defined to identify such packets. Rules 1304 - 1308, for example, match on the EtherType metadata being set to a TPID value; packets matching one of these rules will be DROPPED, logged, and so on. It will be appreciated that in some embodiments, instead of matching the EtherType metadata to a TPID, the rule can match on:

$$\text{EtherType} \mathrel{!=} 0x0800,$$

**then** DROP
However, because typical TCAMs cannot express the not equal (!=) operation with a single rule, embodiments, can check if EtherType == 0x8100 or if EtherType == 0x88a8 or if EtherType == 0x9100, instead.

Rule 1302 shows that malformed packets can be identified based on VLAN ID being a certain value; e.g., VLAN ID == 0; such packets are sometimes referred to as priority tagged packets. For example,
DMAC SMAC 0x8100 0002 0x8100 0000 ETHERTYPE PAYLOAD,
is a double-tagged packet where the first VLAN tag is TPID = 0x8100, VLAN =2 and the second VLAN tag (priority tag) is TPID = 0x8100, VLAN = 0. Accordingly, malformed packets can be prevented from propagating any further into the network, avoiding potential security breaches.

TCAM 1300 is programmed with rules for dropping packets. These rules represent a DENY list. It will be appreciated that the TCAM can be programmed with a PERMIT list (not shown) that allows packets to be forwarded.

In some embodiments, for example in strictly private deployments, the network can transmit custom network packets defined according to internal formats using user-defined fields (UDFs) that do not necessarily conform to IEEE standard formats. Although UDFs can still use the same TPID values and EtherType values defined in the IEEE standards, the start position of the TPID and EtherType values in the packet may not be at the standard byte positions (e.g. 12, 16, 20), depending on how where the UDFs are located in the custom network packets. In some embodiments, the pipeline can include an additional parsing stage to parse the packet and store parsed UDFs into corresponding UDF metadata. For example, a UDF may be defined to store a VLAN tag, but rather than starting at byte 12 (e.g., see FIG. 2), the UDF may start at some other byte location in the packet. Accordingly, in some embodiments, the TCAM rules can match on UDF metadata parsed by the parsing stage.

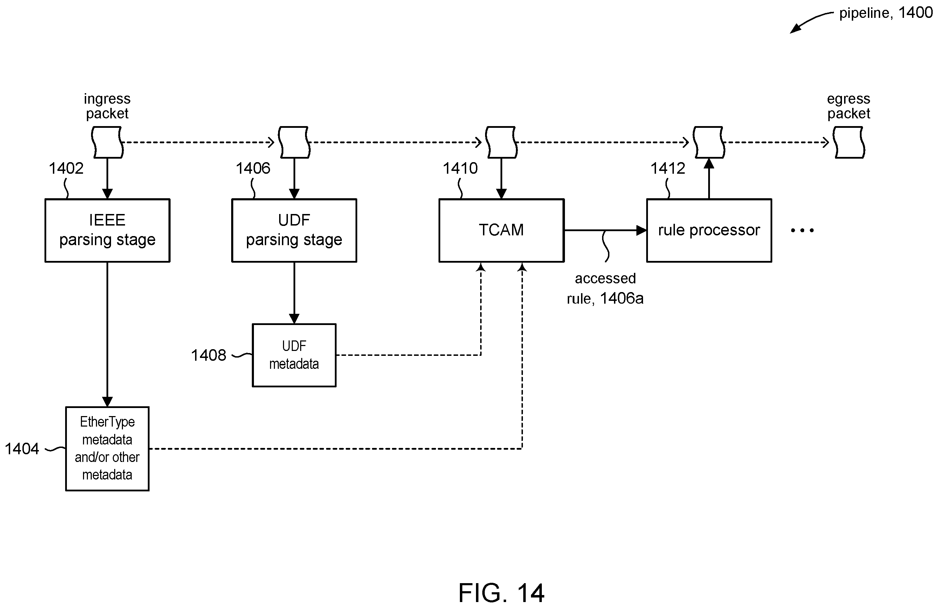

FIG. 14 shows a pipeline 1400 comprising a parsing stage 1402 to parse the ingress packet according to IEEE standards. Parsing stage 1402 can parse standards-based metadata 1404 such as the EtherType. Pipeline 1400 can include a UDF parsing stage 1406 to parse UDF-defined fields in the packet to produce UDF metadata 1408. Standard metadata 1404 and UDF metadata 1408 can be used to match on a rule in TCAM 1410. A matched rule can then be processed by rules processor 1412 to produce the egress packet.

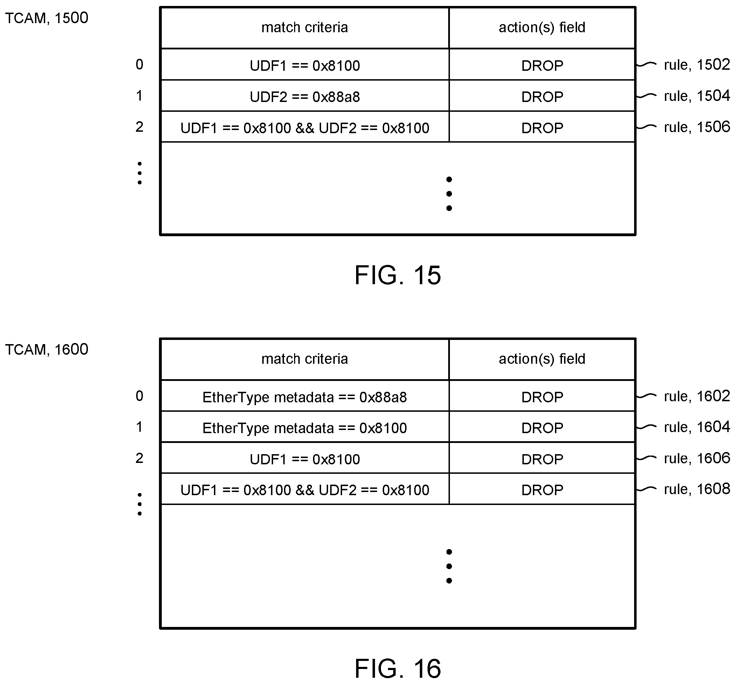

FIG. 15 shows an example of a TCAM 1500 having rules based on UDF metadata 1408 as the match criteria. The rules can be based on matching one UDF (e.g., rules 1502, 1504) or multiple UDFs (e.g., rule 1504). The rules can match on the UDF metadata having certain TPID values (e.g., 0x8100, 0x88a8, etc.).

FIG. 16 shows an example of a TCAM 1600 that is configured with rules to accommodate a parsing stage that can parse IEEE conforming packets (e.g., 1402, FIG. 14) and a parsing stage (e.g., 1406) to parse non-conforming packets having UDFs. If an IEEE conforming packet is parsed, then rules 1602,1604 may be matched. If non-conforming packets are parsed, then rules 1602, 1604 may not be matched because the UDFs containing any VLAN information of interest may be found elsewhere in the packet. However, rules 1606, 1608 may be matched.

The above examples and embodiments should not be deemed to be the only embodiments, and are presented to illustrate the flexibility and advantages of the present disclosure as defined by the following claims.

**Claims**

1. A method in a network device (500) to detect and filter virtual local area network, VLAN, packets, the method comprising:

   receiving an ingress packet, the ingress packet containing one or more VLAN tags;
   determining a starting byte position in the ingress packet based on the one or more VLAN tags contained in the packet;
   storing into a data store data beginning at the starting byte position in the ingress packet;
   using data stored in the data store to identify a matched rule among a plurality of rules stored in a memory (514a, 514p) of the network device (500); and
in response to identifying a matched rule, processing the ingress packet in accordance with one or more actions associated with the matched rule, wherein the one or more actions includes dropping the ingress packet.

2. The method of claim 1, wherein the starting byte position in the ingress packet is determined based on tag protocol identifiers, TPIDs, in the one or more VLAN tags.

3. The method of claim 1, wherein the data beginning at the starting byte position in the ingress packet is interpreted to contain a protocol that describes data contained in a payload of the ingress packet.

4. The method of claim 1, wherein the matched rule is identified when the data in the data store does not represent a protocol that describes data contained in a payload of the ingress packet.

5. The method of claim 4, wherein the matched rule is identified when the data in the data store is a tag protocol identifier, TPID, value instead of a protocol that describes the data contained in the payload of the ingress packet.

6. The method of claim 1, wherein the matched rule is identified when the data store contains a TPID value.

7. The method of claim 1, wherein the matched rule is the highest priority rule among a plurality of rules.

8. A network device (500) comprising:

   at least one packet processor (512a, 512p);
   a content addressable memory (514a, 514p) having stored therein a plurality of first rules; and
   a computer-readable storage medium (508b) comprising executable code for controlling the at least one packet processor (512a, 512p) to:

      receive an ingress packet comprising one or more virtual local area network , VLAN, tags;
      store into a data store (514a, 514p) content in the ingress packet identified based on the one or more VLAN tags in the packet;
      identify a rule from among the plurality of first rules using data stored in the data store (514a, 514p); and
      process the ingress packet in accordance with one or more actions associated with the identified rule,
      wherein the plurality of first rules comprise match criteria that match on VLAN tag data.

9. The network device (500) of claim 8, wherein the one or more actions associated with the identified rule includes dropping the ingress packet.

10. The network device (500) of claim 8, wherein the plurality of first rules are the highest priority rules in the content addressable memory (514a, 514p).

11. The network device (500) of claim 8, wherein at least one of the plurality of first rules matches on the data in the data store (514a, 514p) being a tag protocol identifiers, TPID, value.

12. The network device (500) of claim 8, wherein at least one of the plurality of first rules matches on a VLAN ID in one of the VLAN tags being equal to 0.


**Patentansprüche**

1. Verfahren in einer Netzwerkvorrichtung (500) zum Erkennen und Filtern von virtuellen lokalen Netzwerk- (VLAN) -Paketen, wobei das Verfahren umfasst:

Empfangen eines eingehenden Pakets, wobei das eingehende Paket ein oder mehrere VLAN-Tags enthält;
Bestimmen einer Start-Byte-Position in dem eingehenden Paket basierend auf den ein oder mehreren in dem Paket enthaltenen VLAN-Tags;
Speichern von Daten in einem Datenspeicher, wobei die Daten an der Start-Byte-Position in dem eingehenden Paket beginnen;
Verwenden von im Datenspeicher gespeicherten Daten zum Identifizieren einer übereinstimmenden Regel aus einer Vielzahl von Regeln, die in einem Speicher (514a, 514p) der Netzwerkvorrichtung (500) gespeichert sind; und
als Reaktion auf das Identifizieren einer übereinstimmenden Regel Verarbeiten des eingehenden Pakets in Übereinstimmung mit einer oder mehreren mit der übereinstimmenden Regel verknüpften Aktionen, wobei die eine oder mehreren Aktionen das Verwerfen des eingehenden Pakets einschließen.

2. Verfahren nach Anspruch 1, wobei die Start-Byte-Position in dem eingehenden Paket basierend auf Tag-Protokoll-Identifikatoren (TPIDs) in den ein oder mehreren VLAN-Tags bestimmt wird.

3. Verfahren nach Anspruch 1, wobei die an der Start-Byte-Position in dem eingehenden Paket beginnenden Daten dahingehend interpretiert werden, dass sie ein Protokoll enthalten, das Daten beschreibt, die in einer Nutzlast des eingehenden Pakets enthalten sind.

4. Verfahren nach Anspruch 1, wobei die übereinstimmende Regel identifiziert wird, wenn die Daten in dem Datenspeicher kein Protokoll darstellen, das Daten beschreibt, die in einer Nutzlast des eingehenden Pakets enthalten sind.

5. Verfahren nach Anspruch 4, wobei die übereinstimmende Regel identifiziert wird, wenn die Daten in dem Datenspeicher einen Tag-Protokoll-Identifikator-, TPID-, Wert anstelle eines Protokolls darstellen, das die in der Nutzlast des eingehenden Pakets enthaltenen Daten beschreibt.

6. Verfahren nach Anspruch 1, wobei die übereinstimmende Regel identifiziert wird, wenn der Datenspeicher einen TPID-Wert enthält.

7. Verfahren nach Anspruch 1, wobei die übereinstimmende Regel die Regel mit der höchsten Priorität unter einer Vielzahl von Regeln ist.

8. Netzwerkvorrichtung (500), umfassend:

mindestens einen Paketprozessor (512a, 512p);
einen inhaltadressierbaren Speicher (514a, 514p), in dem eine Vielzahl erster Regeln gespeichert ist; und
ein computerlesbares Speichermedium (508b), umfassend ausführbaren Code zum Steuern des mindestens einen Paketprozessors (512a, 512p), um:

ein eingehendes Paket zu empfangen, das ein oder mehrere virtuelle lokale Netzwerk- (VLAN) -Tags umfasst;
in einem Datenspeicher (514a, 514p) Inhalt in dem eingehenden Paket zu speichern, der basierend auf dem einen oder den mehreren VLAN-Tags in dem Paket identifiziert ist;
unter Verwendung in dem Datenspeicher (514a, 514p) gespeicherter Daten eine Regel aus der Vielzahl erster Regeln zu identifizieren; und
das eingehende Paket in Übereinstimmung mit einer oder mehreren mit der identifizierten Regel verknüpften Aktionen zu verarbeiten,
wobei die Vielzahl erster Regeln Übereinstimmungskriterien umfasst, die auf VLAN-Tag-Daten übereinstimmen.

**9.** Netzwerkvorrichtung (500) nach Anspruch 8, wobei die eine oder mehreren mit der identifizierten Regel verknüpften Aktionen das Verwerfen des eingehenden Pakets einschließen.

**10.** Netzwerkvorrichtung (500) nach Anspruch 8, wobei die Vielzahl erster Regeln die Regeln mit der höchsten Priorität in dem inhaltadressierbaren Speicher (514a, 514p) sind.

**11.** Netzwerkvorrichtung (500) nach Anspruch 8, wobei mindestens eine der Vielzahl erster Regeln darauf übereinstimmt, dass die Daten in dem Datenspeicher (514a, 514p) einen Tag-Protokoll-Identifikator-, TPID-, Wert darstellen.

**12.** Netzwerkvorrichtung (500) nach Anspruch 8, wobei mindestens eine der Vielzahl erster Regeln darauf übereinstimmt, dass eine VLAN-ID in einem der VLAN-Tags gleich 0 ist.

## Revendications

**1.** Procédé dans un dispositif réseau (500) pour détecter et filtrer des paquets d'un réseau local virtuel, VLAN, le procédé comprenant :

une réception d'un paquet entrant, le paquet entrant contenant une ou plusieurs balises VLAN ;
une détermination d'une position d'octet de départ dans le paquet entrant sur la base des une ou plusieurs balises VLAN contenues dans le paquet ;
un stockage, dans un magasin de données, de données commençant à la position d'octet de départ dans le paquet entrant ;
une utilisation de données stockées dans le magasin de données pour identifier une règle mise en correspondance parmi une pluralité de règles stockées dans une mémoire (514a, 514p) du dispositif réseau (500) ; et
en réponse à l'identification d'une règle mise en correspondance, un traitement du paquet entrant conformément à une ou plusieurs actions associées à la règle mise en correspondance, dans lequel les une ou plusieurs actions incluent un rejet du paquet entrant.

**2.** Procédé selon la revendication 1, dans lequel la position d'octet de départ dans le paquet entrant est déterminée sur la base d'identifiants de protocole de balise, TPIDs, dans les une ou plusieurs balises VLAN.

**3.** Procédé selon la revendication 1, dans lequel les données commençant à la position d'octet de départ dans le paquet entrant sont interprétées comme contenant un protocole qui décrit des données contenues dans une charge utile du paquet entrant.

**4.** Procédé selon la revendication 1, dans lequel la règle mise en correspondance est identifiée lorsque les données dans le magasin de données ne représentent pas un protocole qui décrit des données contenues dans une charge utile du paquet entrant.

**5.** Procédé selon la revendication 4, dans lequel la règle mise en correspondance est identifiée lorsque les données dans le magasin de données sont une valeur d'identifiant de protocole de balise, **TPID,** au lieu d'un protocole qui décrit les données contenues dans la charge utile du paquet entrant.

**6.** Procédé selon la revendication 1, dans lequel la règle mise en correspondance est identifiée lorsque le magasin de données contient une valeur de TPID.

**7.** Procédé selon la revendication 1, dans lequel la règle mise en correspondance est la règle de priorité la plus élevée parmi une pluralité de règles.

**8.** Dispositif réseau (500) comprenant :

au moins un processeur de paquets (512a, 512p) ;
une mémoire adressable par le contenu (514a, 514p) dans laquelle est stockée une pluralité de premières règles ; et
un support de stockage lisible par ordinateur (508b) comprenant un code exécutable pour commander l'au moins un processeur de paquets (512a, 512p) à :

recevoir un paquet entrant comprenant une ou plusieurs balises d'un réseau local virtuel, VLAN ;
stocker dans un magasin de données (514a, 514p) un contenu dans le paquet entrant identifié sur la base des une ou plusieurs balises VLAN dans le paquet ;
identifier une règle parmi la pluralité de premières règles en utilisant des données stockées dans le magasin de données (514a, 514p) ; et
traiter le paquet entrant conformément à une ou plusieurs actions associées à la règle identifiée,
dans lequel la pluralité de premières règles comprennent des critères de mise en correspondance qui effectuent une mise en correspondance sur des données de balise VLAN.

**9.** Dispositif réseau (500) selon la revendication 8, dans lequel les une ou plusieurs actions associées à la règle identifiée incluent un rejet du paquet entrant.

10. Dispositif réseau (500) selon la revendication 8, dans lequel la pluralité de premières règles se situent au niveau de priorité le plus élevé dans la mémoire adressable par le contenu (514a, 514p).

11. Dispositif réseau (500) selon la revendication 8, dans lequel au moins une règle parmi la pluralité de premières règles effectue une mise en correspondance sur les données dans le magasin de données (514a, 514p) qui sont une valeur d'identifiants de protocole de balise, TPID.

12. Dispositif réseau (500) selon la revendication 8, dans lequel au moins une règle parmi la pluralité de premières règles effectue une mise en correspondance sur un ID de VLAN dans une des balises VLAN qui est égal à 0.

EtherType (2 bytes)

byte offset → 0    6    12    14    16    18

| DMAC | SMAC | EthType = 0x0800 | payload | CRC/FCS |

untagged format

**FIG. 1**

VLAN tag (4 bytes)

byte offset → 0    6    12    14    16    18

| DMAC | SMAC | TPID = 0x8100 | TCI | EthType = 0x0800 | payload | CRC/FCS |

single-tagged format

**FIG. 2**

VLAN tag (outer)    VLAN tag (inner)

byte offset → 0    6    12    14    16    20    22

| DMAC | SMAC | TPID = 0x8a88 | TCI | TPID = 0x8100 | TCI | EthType = 0x0800 | payload | CRC/FCS |

double-tagged format

**FIG. 3**

byte offset

VLAN tag | VLAN tag | VLAN tag

0　　　　　　6　　　　　12　　　14　　　16　　　　　20　　　　　24　　　26

| DMAC | SMAC | TPID = 0x8100 | TCI | TPID = 0x8100 | TCI | TPID = 0x8100 | TCI | EthType = 0x0800 | payload | CRC/FCS |

triple-tagged format

## FIG. 4

network device, 500 (e.g., switch 1, switch 2, switch 3)

control plane

data plane

management module, 502

CPU(s), 508a

memory, 508b

internal fabric module 504

I/O module, 506p

packet processor 512p

memory 514p

TCAM

ports, 510p

I/O module, 506a

packet processor 512a

memory 514a

ports, 510a

outer tpid

inner TPID

outer tpid

FIG. 5

receive ingress packet,
6<u>02</u>

parse ingress
packet → metadata, 6<u>04</u>
(FIG. 8)

match a rule using
metadata, <u>606</u>

apply action(s) associated
with matched rule, <u>608</u>

## FIG. 6

ingress
packet

egress
packet

702

parsing stage
(FIG. 8)

706

TCAM

708

rule processor

• • •

accessed
rule, 706a

EtherType
metadata
and/or other
metadata

704

pipeline (packet processor), 700

## FIG. 7

```
                    ┌─────────────────┐
                    │  receive packet │
                    │  (frame), 802   │
                    └─────────────────┘
                             │
                             ▼
              Y        ╱ byte 12:13 ╲        N
        ┌─────────────╱ outer TPID? ╲─────────────┐
        │             ╲             ╱              │
        │              ╲    804    ╱               │
        │                                          │
        ▼                                          ▼
 Y   ╱ byte 16:17 ╲   N            Y   ╱ byte 12:13 ╲   N
┌───╱ inner TPID? ╲───┐          ┌───╱ inner TPID? ╲───┐
│   ╲             ╱   │          │   ╲             ╱   │
│    ╲    806    ╱    │          │    ╲    808    ╱    │
│                     │          │                     │
▼                     ▼          ▼                     ▼
```

| (double-tagged) store bytes 20:21 into EtherType metadata, 812 | (single-tagged, outer) store bytes 16:17 into EtherType metadata, 814 | (single-tagged, inner) store bytes 16:17 into EtherType metadata, 816 | (untagged) store bytes 12:13 into EtherType metadata, 818 |

```
        │                     │          │                     │
        │                     ▼          ▼                     │
        │            ┌──────────────────────┐                  │
        └───────────▶│ parse remainder of the │◀────────────────┘
                     │     packet, 820        │
                     └──────────────────────┘
```

FIG. 8

EP 4 423 984 B1

byte offset ⟶ 0    6    12    14    16    18

| DMAC | SMAC | TPID= 0x9100 | TCI | EthType = 0x0800 | payload | CRC/FCS |

outer TPID = 0x8a88
inner TPID = 0x8100

0x9100 — EtherType metadata

**FIG. 9**

byte offset ⟶ 0    6    12    14    16    18

| DMAC | SMAC | TPID= 0x88a8 | TCI | EthType = 0x0800 | payload | CRC/FCS |

outer TPID = 0x8100
inner TPID = 0x8100

0x88a8 — EtherType metadata

**FIG. 10**

byte offset ⟶ 0     6     12    14    16    20

| DMAC | SMAC | TPID= 0x8100 | TCI | TPID= 0x88a8 | TCI | EthType = 0x0800 | payload | CRC/FCS |

outer TPID = 0x8100
inner TPID = 0x8100

0x88a8 — EtherType metadata

**FIG. 11**

byte offset ⟶ 0     6     12    14    16    20

| DMAC | SMAC | TPID= 0x88a8 | TCI | TPID= 0x8100 | TCI | EthType = 0x0800 | payload | CRC/FCS |

outer TPID = 0x8100
inner TPID = 0x8100

0x88a8 — EtherType metadata

**FIG. 12**

EP 4 423 984 B1

EP 4 423 984 B1

priority

TCAM, 1300

| match criteria | action(s) field |
|---|---|
| double-tagged +<br>inner VLAN ID metadata == 0 | DROP |
| EtherType metadata == 0x8100 | DROP |
| EtherType metadata == 0x88a8 | DROP |
| EtherType metadata == 0x9100 | DROP |
|  |  |
|  |  |
|  |  |
| SIP == 192.0.0.0/24 | --action(s)-- |
|  |  |

0 — rule, 1302

1 — rule, 1304

2 — rule, 1306

3 — rule, 1308

4

5

rule, 1310

decreasing priority

FIG. 13

FIG. 14

EP 4 423 984 B1

TCAM, 1500

| | match criteria | action(s) field | |
|---|---|---|---|
| 0 | UDF1 == 0x8100 | DROP | rule, 1502 |
| 1 | UDF2 == 0x88a8 | DROP | rule, 1504 |
| 2 | UDF1 == 0x8100 && UDF2 == 0x8100 | DROP | rule, 1506 |
| ... | | | |

**FIG. 15**

TCAM, 1600

| | match criteria | action(s) field | |
|---|---|---|---|
| 0 | EtherType metadata == 0x88a8 | DROP | rule, 1602 |
| 1 | EtherType metadata == 0x8100 | DROP | rule, 1604 |
| 2 | UDF1 == 0x8100 | DROP | rule, 1606 |
| | UDF1 == 0x8100 && UDF2 == 0x8100 | DROP | rule, 1608 |
| ... | | | |

**FIG. 16**

**REFERENCES CITED IN THE DESCRIPTION**

**Patent documents cited in the description**

- US 20140351878 A1